# EUROPÄISCHE PATENTANMELDUNG

(11) **EP 4 706 893 A1**
(43) Veröffentlichungstag der Anmeldung: **11.03.2026**
(21) Anmeldenummer: 24198526.6
(22) Anmeldetag: 04.09.2024
(51) Int. Cl.: B25J 9/00, B25J 19/02, B25J 19/06, B25J 19/00

(54) **MONTIERBARE SENSORDECKEL FÜR ROBOTER**

(71) Anmelder: ROUNDPEG TECHNOLOGIES GMBH, 85609 Aschheim (DE)
(72) Erfinder: Krieg, Oliver, 85609 Aschheim (DE); Eichstaedt, Etienne, 85609 Aschheim (DE)
(74) Vertreter: Maiwald GmbH

(57) **Zusammenfassung**

Robotersensoranordnung 1 aufweisend eine Sensoraufnahme 10; einen elektrischen Kontakt 20, der mit der Sensoraufnahme 10 verbunden ist und ausgeführt ist einen elektrischen Kontakt zu einem in der Sensoraufnahme befindlichen Sensor 2 herzustellen; einen Sensordeckel 30 mit einer Überragung 31, der ausgeführt ist, die Sensoraufnahme 10 abzudecken, wobei der Sensordeckel 30 die Sensoraufnahme 10 an wenigstens einer Seite mit der Überragung 31 überragt, an der der elektrische Kontakt 20 vorgesehen ist; und ein Spiralkabel 40, welches den elektrischen Kontakt 20 kontaktiert. Roboterarmsegment und Robotereinheit mit einer vorgenannten Robotersensoranordnung.

## Beschreibung

### GEBIET DER ERFINDUNG

Die Erfindung betrifft eine Anordnung, eine Vorrichtung und ein Verfahren zur sicheren Kabelverlegung in einem Robotersystem, welches betriebs- und bediensicher ist.

### HINTERGRUND DER ERFINDUNG

Die Umfelderkennung am Roboter geschieht heute mit Sensoren, die direkt in den Roboter verbaut werden. Dies ermöglicht es dem Roboter, Hindernisse zu erkennen, zu umgehen und nicht mit Menschen zu kollidieren.

Systeme im Stand der Technik sehen zum Teil eine Integration der Sensoren in die Deckel des Roboters vor. Es gibt Konzepte im Stand der Technik, die Sensoren von außen montieren:
- https://www.airskin.io
- https://www.bosch.com/de/stories/industrie-4-0-flexible-production-line/
- Innenverlegung der Kabel (PCT_EP2023_082259)
Bei 1) handelt es sich nur um eine Erkennung von Berührungen. Daher ist es nicht unmittelbar erforderlich, die Kabel enganliegend am Roboter zu verlegen. Bei 2) werden die Verbindungskabel durch großflächige Sensorelemente mit integrierten Stecksystemen verbaut. Bei 3) wird ein Deckel als Bestandteil des Robotergehäuses abgeschraubt und das Kabel innen verlegt.

Diese Sensoren müssen jedenfalls montiert werden und deren Strom und Signalversorgung, insbesondere kabelgebunden, muss betriebs- und bediensicher sein.

Bei externer Kabelverlegung müssen die Kabel große Bögen legen, um den Kabelvorhalt für die veränderlichen Wege bei Änderung der Roboterposition vorzuhalten. Diese können sich mit umgebenden Bauteilen oder Menschen verheddern. Im schlimmsten Fall können damit Anbauten umfallen und Menschen verletzen. Das kann auch nicht mit einer Umfelderkennung genutzt werden, da die Kabel dann die Sensoren stören würden.

Eine Kabelverlegung innerhalb der außenmontierten Sensorelemente ist sehr aufwändig. Es müssen entweder rotierende Steckerkonzepte vorgesehen werden, oder der Kabeldurchhang muss speziell geführt werden. Beide Lösungen erschweren es, die Module schnell auf den Roboter zu montieren.

Eine weitere Lösung besteht darin, die Kabel innerhalb des Roboters zu verlegen. Das ist aber sehr aufwändig, da der Roboter dann vollständig zerlegt werden muss.

Im Produktionsalltag ist es häufig so, dass Roboter bereits in einer Anlage montiert sind oder schnell umgebaut werden müssen. Hier ist es sehr vorteilhaft, wenn die Sensormodule nachträglich vom Anwender selbst direkt auf dem Roboter montiert werden kann. Die bisherigen Konzepte sind dafür nicht geeignet.

Als Aufgabe der Erfindung kann angesehen werden, die oben genannten Problem zu lösen und eine Kabelverlegung am Roboter zu ermöglichen, die trotzdem genügend Kabellänge vorhält, um die Bewegungsfreiheit des Roboters nicht einzuschränken. Als eine weitere Aufgabe der Erfindung kann angesehen werden, Sensormodule flexibel am Roboter zu befestigen, um eine Austauschbarkeit zu gewährleistet und der Benutzer entscheiden kann, welche Bereiche er am Roboter mit Sensoren ausstatten möchte.

### ZUSAMMENFASSUNG DER ERFINDUNG

Gegenstand der Erfindung ist eine Robotersensoranordnung, ein Roboterarmsegment und eine Robotereinheit gemäß dem Gegenstand der unabhängigen Ansprüche, wobei weitere Ausführungsformen durch die anhängigen Ansprüche und die beschriebenen Ausführungsformen verkörpert werden.

Gemäß einer Ausführungsform wird eine Robotersensoranordnung bereitgestellt aufweisend: eine Sensoraufnahme; einen elektrischen Kontakt, der mit der Sensoraufnahme verbunden ist und ausgeführt ist einen elektrischen Kontakt zu einem in der Sensoraufnahme befindlichen Sensor herzustellen; einen Sensordeckel mit einer Überragung, der ausgeführt ist, die Sensoraufnahme abzudecken, wobei der Sensordecke die Sensoraufnahme an wenigstens einer Seite mit der Überragung überragt, an der der elektrische Kontakt vorgesehen ist; und ein längenelastisches Kabel, insbesondere ein Spiralkabel, welches den elektrischen Kontakt kontaktiert.

Es sei verstanden, dass die Sensoraufnahme sowohl am Sensordeckel vorgesehen sein kann als auch an einem Roboterarmsegmentkörper, dort insbesondere in einer Aufnahme, die vom Deckel verschlossen wird. Der Kontakt kann ebenfalls am Deckel oder an einem Roboterarmsegment vorgesehen sein, je nachdem, wo der Sensor angeordnet ist. Wenn der Senor am Roboterarmsegment angeordnet ist, ist am Deckel nicht zwingend ein Kontakt erforderlich. Der Kontakt kann zur Führung einer Versorgungsspannung und/oder eines Sensorsignals dienen.

Auf diese Weise können Sensormodule flexibel modular am Roboter angeschraubt werden und unterschiedliche Sensormodule mit verschiedenen Funktionen ausgetauscht und funktionsgerecht angepasst werden. Durch die Überragung wird ermöglicht, dass Steckverbindungen und anliegende Kabel nicht von einer Umfelderkennung erkannt werden und diese nicht von durchhängenden Kabeln und Leitungen irritiert wird. Das wird durch ein eng anliegendes Spiralkabel erreicht, welches sich auch bei Längenänderungen an einen Robotersegmentkörper anlegt und nicht durchhängt, in Verbindung mit einer Überragung, die seitlich soweit über Kontakte und Steckverbindungen, sowie Spiralkabel überragt, dass die Kontakte und Steckverbindungen, sowie Spiralkabel bei einer Betrachtung entlang des Robotersegmentkörpers unter der Überragung verborgen bleiben und nicht von einer Umfelderkennung oder Kollisionserkennung detektiert werden. Zur Lösung werden Spiralkabel verwendet, die eine innere Vorspannung ermöglichen und damit bei veränderlichem Abstand trotzdem eng am Roboterarmsegment anliegen.

Gemäß einer Ausführungsform ist die Sensoraufnahme ausgeführt einen Sensor lösbar und austauschbar aufzunehmen.

Auf diese Weise können Sensormodule unter Beibehaltung der Kontakt- und Verbindungseinrichtungen ausgetauscht werden.

Gemäß einer Ausführungsform ist die Sensoraufnahme ausgeführt einen Sensor unlösbar aufzunehmen.

Auf diese Weise können fest Module bereitgestellt werden, die eine Veränderung der Sensorposition vermeiden.

Gemäß einer Ausführungsform ist die Sensoraufnahme einstückig mit einem Sensor ausgebildet.

Auf diese Weise kann eine kompakte Bauweise erzielt werden.

Gemäß einer Ausführungsform weist der elektrische Kontakt eine Steckverbindung auf, mit der das Spiralkabel an die Sensoraufnahme ankoppelbar ist.

Auf diese Weise können Spiralkabel ausgewechselt werden, insbesondere wenn diese beschädigt werden.

Gemäß einer Ausführungsform wird die Steckverbindung von dem Sensordeckel vollständig überragt.

Auf diese Weise kann die gesamte Steckverbindung einschließlich Stecker und Buchsen abgedeckt werden, ebenso wie daran angekoppelte Spiralkabel.

Gemäß einer Ausführungsform ist der Sensordeckel im Außendurchmesser so vergrößert, dass der Sensordeckel seitlich über die Steckverbindung hinausragt, dergestalt, dass das anliegende Spiralkabel nicht von einer vorgebbaren Umfelderkennung erkennbar ist.

Auf diese Weise kann eine flexible, insbesondere längenflexible Kabelverbindung vor eine Umfeld- oder Kollisionserkennung verborgen werden.

Gemäß einer Ausführungsform ist das Spiralkabel so dimensioniert, dass eine innere Vorspannung des Spiralkabels bei veränderlichem Abstand ein Durchhängen bzw. eine Buchtenbildung des Spiralkabels verhindert.

Auf diese Weise kann verhindert werden, dass das Kabel aus dem Beobachtungsschatten der Überragung bei einer Längenveränderung hervortritt.

Gemäß einer Ausführungsform weist das Spiralkabel einen runden oder rundförmigen oder ovalen Spiralquerschnitt auf.

Auf diese Weise kann eine längenflexible Kabelverbindung bereitgestellt werden.

Gemäß einer Ausführungsform weist das Spiralkabel einen nierenförmigen Spiralquerschnitt auf, wobei ein konkaver Bereich der Nierenform so ausgeführt ist, dass dieser an einen Roboterarmsegmentkörper anlegbar und führbar ist.

Auf diese Weise kann das Spiralkabel an dem Roboterarmsegment geführt werden und ein Heraustreten aus dem Überragungsschatten verhindert werden.

Gemäß einer Ausführungsform wird ein Roboterarmsegment mit einem Roboterarmsegmentkörper und einer vorstehend beschriebenen Robotersensoranordnung bereitgestellt, wobei das Spiralkabel entlang des Roboterarmsegmentkörpers geführt ist.

Gemäß einer Ausführungsform ist das Spiralkabel so dimensioniert, dass eine innere Vorspannung des Spiralkabels bei veränderlichem Abstand ein Durchhängen bzw. eine Buchtenbildung des Spiralkabels derart verhindert, sodass gewährleistet ist, dass das Spiralkabel eng am Roboterarmsegmentkörper anliegt.

Gemäß einer Ausführungsform wird eine Robotereinheit bereitgestellt mit einer Mehrzahl von vorstehend beschriebenen Roboterarmsegmenten, die über Gelenke miteinander verbunden sind, ferner mit einer Gelenkkabelbrücke, die ein Gelenk bezüglich einer elektrischen Verbindung für einen Sensor überbrückt.

Gemäß einer Ausführungsform umfasst die Gelenkkabelbrücke an jedem Roboterarmsegment eine Kabelhalterung, die eine Kabelführung des Spiralkabels seitlich überragt.

Gemäß einer Ausführungsform ist die seitliche Überragung ausgeführt ein Spiralkabel für eine vorgebbare Umfelderkennung unerkennbar zu machen.

Die Erfindung erweitert die Vielseitigkeit von Robotern die neu gebaut werden oder nachgerüstet werden um ein Vielfaches. Damit ist es möglich, innerhalb von Minuten eine Kabelverlegung von äußeren Modulen am Roboter zu ermöglichen. Durch die einzelnen Module ist ferner sichergestellt, dass sich auch bei großer Bewegung des Roboters die Längenänderungen der Kabel auf jeweils nur ein relatives Gelenk beziehen. Damit wird der relative Durchhang verringert. Wenn also andere elektronische Komponenten am Robotergreifer angebracht werden müssen (z.B. eine Kamera), dann ermöglicht diese Erfindung es, die Daten- und Stromversorgung ebenfalls nah am Roboter und ohne kompliziertes Kabelmanagement zu gewährleisten.

Mit diesem modularen System können auch Greifer und andere Anbauten am Roboter verbunden werden. Daher ist unter dem Begriff Roboterarmsegment auch ein Greifer oder andere Anbauten zu verstehen.

### KURZE BESCHREIBUNG DER FIGUREN

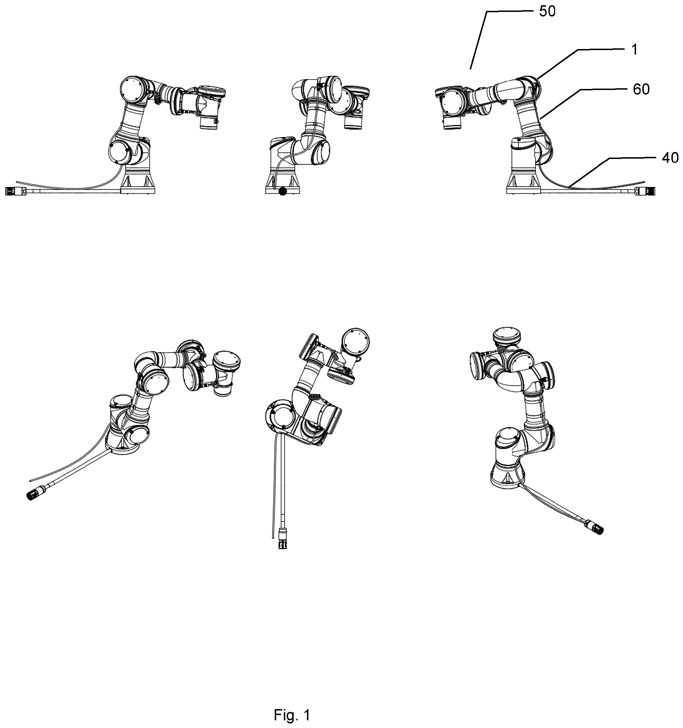

Die Erfindung wird anhand beispielhafter ausführungsformen anhand folgender Figuren beschrieben, in denen
Fig. 1 einen Roboter mit montierten Sensordeckeln gemäß einer Ausführungsform illustriert,

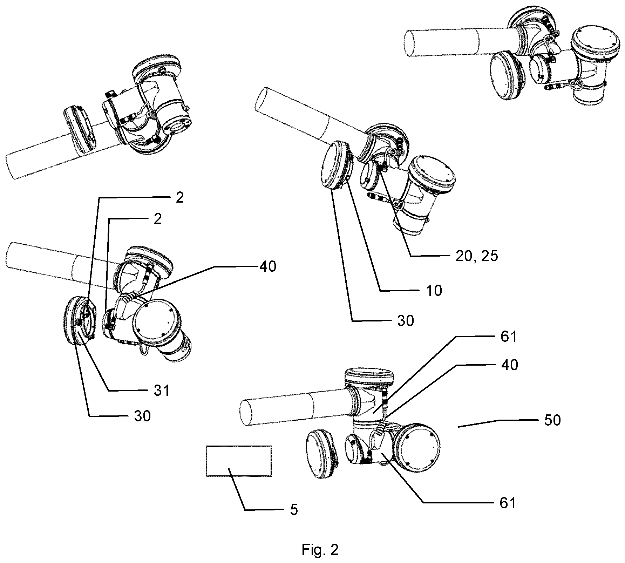

Fig. 2 einen Roboter mit abgenommenem Deckelmodul zur Montage gemäß einer Ausführungsform illustriert; und

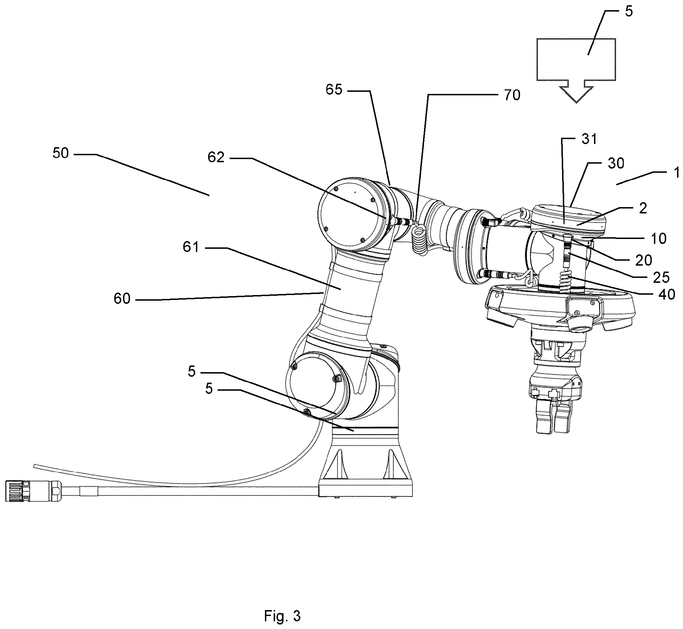

Fig. 3 einen Roboter mit montierten Deckeln einschließlich Absicherung für ein Werkzeug gemäß einer Ausführungsform illustriert.

## Patentansprüche

1. Robotersensoranordnung (1) aufweisend:
a. eine Sensoraufnahme (10);
b. einen elektrischen Kontakt (20), der mit der Sensoraufnahme (10) verbunden ist und ausgeführt ist einen elektrischen Kontakt zu einem in der Sensoraufnahme befindlichen Sensor (2) herzustellen;
c. einen Sensordeckel (30) mit einer Überragung (31), der ausgeführt ist, die Sensoraufnahme (10) abzudecken, wobei der Sensordeckel (30) die Sensoraufnahme (10) an wenigstens einer Seite mit der Überragung (31) überragt, an der der elektrische Kontakt (20) vorgesehen ist,
d. ein längenelastisches Kabel, insbesondere ein Spiralkabel (40), welches den elektrischen Kontakt (20) kontaktiert.

2. Robotersensoranordnung gemäß Anspruch 1, wobei die Sensoraufnahme (10) ausgeführt ist einen Sensor (2) lösbar und austauschbar aufzunehmen.

3. Robotersensoranordnung gemäß einem der Ansprüche 1 und 2, wobei die Sensoraufnahme (10) ausgeführt ist einen Sensor (2) unlösbar aufzunehmen.

4. Robotersensoranordnung gemäß einem der Ansprüche 1 bis 3, wobei die Sensoraufnahme (10) einstückig mit einem Sensor (2) ausgebildet ist.

5. Robotersensoranordnung gemäß einem der Ansprüche 1 bis 4, wobei der elektrische Kontakt (20) eine Steckverbindung (25) aufweist, mit der das Spiralkabel (40) an die Sensoraufnahme (10) ankoppelbar ist.

6. Robotersensoranordnung gemäß Anspruch 5, wobei die Steckverbindung (25) von dem Sensordeckel (20) vollständig überragt wird.

7. Robotersensoranordnung gemäß Anspruch 6, wobei der Sensordeckel (20) im Außendurchmesser so vergrößert ist, dass der Sensordeckel (20) seitlich über die Steckverbindung (25) hinausragt, dergestalt, dass das anliegende Spiralkabel (40) nicht von einer vorgebbaren Umfelderkennung (5) erkennbar ist.

8. Robotersensoranordnung gemäß einem der Ansprüche 1 bis 7, wobei das Spiralkabel (40) so dimensioniert ist, dass eine innere Vorspannung des Spiralkabels (40) bei veränderlichem Abstand ein Durchhängen bzw. eine Buchtenbildung des Spiralkabels (40) verhindert.

9. Robotersensoranordnung gemäß einem der Ansprüche 1 bis 8, wobei das Spiralkabel (40) einen runden oder ovalen oder rundförmigen oder insgesamt konvexen Spiralquerschnitt aufweist.

10. Robotersensoranordnung gemäß einem der Ansprüche 1 bis 8, wobei das Spiralkabel (40) einen nierenförmigen Spiralquerschnitt aufweist, wobei ein konkaver Bereich der Nierenform so ausgeführt ist, dass dieser an einen Roboterarmsegmentkörper (61) anlegbar und führbar ist.

11. Roboterarmsegment (60) mit einem Roboterarmsegmentkörper (61) und einer Robotersensoranordnung (1) gemäß einem der Ansprüche 1 bis 10, wobei das Spiralkabel (40) entlang des Roboterarmsegmentkörpers (61) geführt ist.

12. Roboterarmsegment gemäß Anspruch 11, wobei das Spiralkabel (40) so dimensioniert ist, dass eine innere Vorspannung des Spiralkabels (40) bei veränderlichem Abstand ein Durchhängen bzw. eine Buchtenbildung des Spiralkabels (40) derart verhindert, sodass gewährleistet ist, dass das Spiralkabel (40) eng am Roboterarmsegmentkörper (61) anliegt.

13. Robotereinheit (50) mit einer Mehrzahl von Roboterarmsegmenten (60) gemäß einem der Ansprüche 11 und 12, die über Gelenke (65) miteinander verbunden sind, ferner mit einer Gelenkkabelbrücke (70), die ein Gelenk (65) bezüglich einer elektrischen Verbindung für einen Sensor überbrückt.

14. Robotereinheit gemäß Anspruch 13, wobei die Gelenkkabelbrücke (70) an jedem Roboterarmsegment (60) eine Kabelhalterung (62) umfasst, die eine Kabelführung des Spiralkabels (40) seitlich überragt.

15. Robotereinheit gemäß Anspruch 14, wobei die seitliche Überragung (31) ausgeführt ist ein Spiralkabel (40) für eine vorgebbare Umfelderkennung (5) unerkennbar zu machen.
